# EUROPÄISCHE PATENTSCHRIFT

(11) **EP 1 984 673 B1**
(45) Veröffentlichungstag und Bekanntmachung des Hinweises auf die Patenterteilung: **21.12.2016**
(21) Anmeldenummer: 07701314.2
(22) Anmeldetag: 13.02.2007
(51) Int. Cl.: F23B 80/04, F23L 15/00

(54) **VORRICHTUNG ZUM VERBRENNEN ORGANISCHER STOFFE**
DEVICE FOR THE COMBUSTION OF ORGANIC SUBSTANCES
DISPOSITIF POUR LA COMBUSTION DE MATIÈRES ORGANIQUES

(30) Priorität: 16.02.2006 AT 2452006
(43) Veröffentlichungstag der Anmeldung: 29.10.2008
(73) Patentinhaber: Freller, Walter, A-5310 Mondsee (AT)
(72) Erfinder: Freller, Walter, A-5310 Mondsee (AT)
(74) Vertreter: Patentanwaltskanzlei Hübscher
(86) Internationale Anmeldenummer: PCT/AT2007/000070
(87) Internationale Veröffentlichungsnummer: WO 2007/092977

(56) Entgegenhaltungen:
- EP-A- 0 224 466
- EP-A- 0 915 289
- US-A- 4 565 184
- US-A- 5 315 938

## Beschreibung

### Technisches Gebiet

Die Erfindung bezieht sich auf eine Vorrichtung zum Verbrennen organischer Stoffe mit einer in einem Gehäuse vorgesehenen, gegenüber dem Gehäuse wärmegedämmten, liegenden Brennkammer und mit einem die Verbrennungsluft mit Hilfe der heißen Abgase aus der Brennkammer vorwärmenden Gegenstromwärmetauscher, der einen zwischen der Brennkammer und einer die Brennkammer umschließenden Wärmetauscherwand gebildeten Strömungskanal für die Verbrennungsluft sowie einen Strömungskanal für die heißen Abgase auf der der Brennkammer abgewandten Seite der Wärmetauscherwand bildet.

### Stand der Technik

Um organische Stoffe, insbesondere Müll, zu verbrennen, ist es bekannt (US 5 315 938 A), die in einem Gehäuse vorgesehene, liegende und axial beschickbare Brennkammer gegenüber dem einen flüssigen Wärmeträger aufnehmenden Gehäuse mit einer Wärmedämmung zu versehen, um in der Brennkammer vorteilhafte Verbrennungsbedingungen sicherzustellen, die durch keinen unkontrollierten Wärmeaustausch mit dem umgebenden Wärmeträger beeinträchtigt werden können. Die der Brennkammer zugeführte Verbrennungsluft wird mit Hilfe der heißen Abgase aus der Brennkammer vorgewärmt. Zu diesem Zweck ist ein den unteren Teil der Brennkammer umschließender Gegenstromwärmetauscher innerhalb der Wärmedämmung der Brennkammer vorgesehen, der eine den Strömungskanal für die Verbrennungsluft vom Strömungskanal für die Abgase trennende Wärmetauscherwand in Form eines mäanderförmig gewellten Bleches aufweist. Obwohl durch diese Maßnahme eine vorteilhafte Verbrennungsluftvorwärmung gegeben ist, wird die verbleibende Restwärme der Abgase nicht genützt. Dies ist auch schwierig, weil die Brennkammer gegenüber dem als Speicher für den flüssigen Wärmeträger dienenden Gehäuse durch die Wärmedämmung getrennt ist, so daß die Abgase durch den Boden der Brennkammer abgeführt werden müssen. Außerdem wird die Verbrennungsluft auf der der Brennkammer zugekehrten Seite der Wärmetauscherwand des Gegenstromwärmetauschers geführt, so daß zwischen dem Strömungskanal für die Verbrennungsluft und der Brennkammer eine zusätzliche Wärmedämmung vorgesehen werden muß, um einen Wärmeübergang von der Brennkammer auf die Verbrennungsluft zu unterbinden.

### Darstellung der Erfindung

Der Erfindung liegt somit die Aufgabe zugrunde, eine Vorrichtung zum Verbrennen organischer Stoffe der eingangs geschilderten Art so auszugestalten, daß sich unter Beibehaltung vorteilhafter Abbrandbedingungen eine gute Ausnützung der fühlbaren Abwärme der heißen Abgase aus der Brennkammer ergibt, und zwar mit einem vergleichsweise einfachen Konstruktionsaufwand.

Die Erfindung löst die gestellte Aufgabe dadurch, daß die Wärmetauscherwand des Gegenstromwärmetauschers auf der Außenseite der Wärmedämmung der Brennkammer vorgesehen ist, die einen oberen in das Gehäuse mündenden Abgasaustritt aufweist, daß in den oberen sich beidseits der zylindrischen Brennkammer zwischen dieser und dem im wesentlichen prismatischen Gehäuse ergebenden Zwickelräumen parallel zur Brennkammer verlaufende Wärmetauscher für die Erwärmung eines Wärmeträgers mit der fühlbaren Abwärme der heißen Abgase vorgesehen sind und daß der die Abgase aufnehmende Strömungskanal des Gegenstromwärmetauschers für die Verbrennungsluft von den beiden Zwickelräumen ausgeht, während sich die Wärmetauscherwand mit dem Strömungskanal für die Verbrennungsluft in die Zwickelräume erstreckt.

Da der Gegenstromwärmetauscher zur Vorwärmung der Verbrennungsluft die Brennkammer außerhalb deren Wärmedämmung umschließt, kann der Temperaturverlauf bei der Erwärmung der Verbrennungsluft keinen nachteiligen Einfluß auf die Abbrandbedingungen in der Brennkammer nehmen. Dazu kommt, daß die fühlbare Abwärme der durch einen oberen Abgasaustritt aus der Brennkammer in das Gehäuse ausströmenden Abgase vorteilhaft für die Erwärmung eines Wärmeträgers genützt werden kann, ohne auf die geforderte Vorwärmung der Verbrennungsluft verzichten zu müssen. Es brauchen ja lediglich in den Zwickelräumen, die sich beidseits der zylindrischen Brennkammer und dem prismatischen Gehäuse ergeben, entsprechende Wärmetauscher vorgesehen zu werden, die von den aus der Brennkammer austretenden heißen Abgasen umströmt werden. Werden die Abgase aus den Zwickelräumen durch den Gegenstromwärmetauscher für die Verbrennungsluft abgezogen, so ist für eine ausreichende Vorwärmung der Verbrennungsluft gesorgt, insbesondere wenn die Wärmetauscherwand sich in Umfangsrichtung der Brennkammer in die Zwickelräume hinein erstreckt, so daß eine entsprechende Verlängerung des Strömungskanals für die Verbrennungsluft erreicht wird. Über die sich in die Zwickelräume des Gehäuses erstreckende Wärmetauscherwand des Gegenstromwärmetauschers erfolgt ja ein zusätzlicher Wärmeaustausch zwischen den heißen Abgasen in den Zwickelräumen und der durch den Strömungskanal geleiteten Verbrennungsluft.

Besonders günstige Konstruktionsverhältnisse ergeben sich, wenn der Strömungskanal des Gegenstromwärmetauschers zwischen der Brennkammer und der Wärmetauscherwand im Bereich des Abgasaustrittes in die Brennkammer mündet, weil in diesem Fall ein Anteil der erwärmten Verbrennungsluft mit den heißen Abgasen in das Gehäuse zur Verbesserung der Nachverbrennung in den Zwickelräumen ausgetragen werden kann, und zwar in Abhängigkeit von den jeweiligen Strömungsverhältnissen, die durch bauliche Maßnahmen den jeweiligen Anforderungen entsprechend eingestellt werden können. Zu diesem Zweck kann die Wärmetauscherwand des Gegenstromwärmetauschers den Abgasaustritt der Brennkammer überdecken und im Bereich des Abgasaustrittes Durchtrittsöffnungen aufweisen.

Um einfache Konstruktionsverhältnisse auch für die Wärmetauscher zum Erwärmen des Wärmeträgers zu erhalten, können die Wärmetauscher in den Zwickelräumen des Gehäuses ein zur Achse der Brennkammer paralleles Strömungsrohr für den Wärmeträger aufweisen, das mit Rohrstutzen für die Abgasführung radial durchsetzt ist. Aufgrund dieser Konstruktionsmaßnahmen bilden nicht nur die Strömungsrohre für den Wärmeträger eine Wärmetauscherfläche, sondern auch die die Strömungsrohre radial durchsetzenden Rohrstutzen, die von den in die Zwickelräume des Gehäuses ausströmenden heißen Abgase durchströmt werden, insbesondere wenn sie hinsichtlich ihrer Neigung an die sich in den Zwickelräumen einstellenden Strömungsverhältnissen angepaßt werden. Die Durchströmungsrate kann aber auch durch Leitflächen für die Abgasströmung in den Zwickelräumen verbessert werden.

### Kurz Beschreibung der Zeichnung

In der Zeichnung ist der Erfindungsgegenstand beispielsweise dargestellt. Es zeigen
- Fig. 1: eine erfindungsgemäße Vorrichtung zum Verbrennen organischer Stoffe in einer zum Teil aufgerissenen Seitenansicht und
- Fig. 2: diese Vorrichtung in einem Schnitt nach der Linie II - II der Fig. 1.

### Weg zur Ausführung der Erfindung

Die Vorrichtung zum Verbrennen organischer Stoffe, insbesondere von Müll, weist ein prismatisches Gehäuse 1 mit einem rechtwinkeligen Querschnitt und eine im wesentlichen zylindrische Brennkammer 2 mit liegender Achse auf. Diese Brennkammer ist mit einer Wärmedämmung 3 versehen, die die Brennkammer gegenüber dem Gehäuse 1 abschirmt. Aufgrund der Anordnung einer im wesentlichen zylindrischen Brennkammer 2 in einem prismatischen Gehäuse 1 mit rechtwinkeligem Querschnitt ergeben sich in den Eckbereichen des Gehäuses 1 zwischen der Brennkammer 2 und dem Gehäuse 1 Zwickelräume 4, 5, von denen die oberen beidseits der Brennkammer 3 liegenden Zwickelräume 4 parallel zur Brennkammer 2 verlaufende Wärmetauscher 6 für einen Wärmeträger aufnehmen.

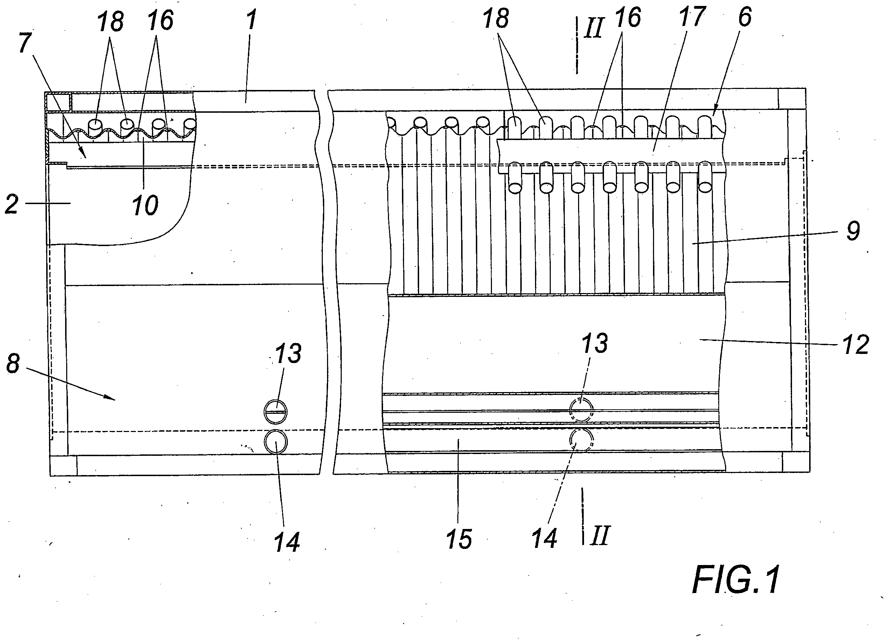

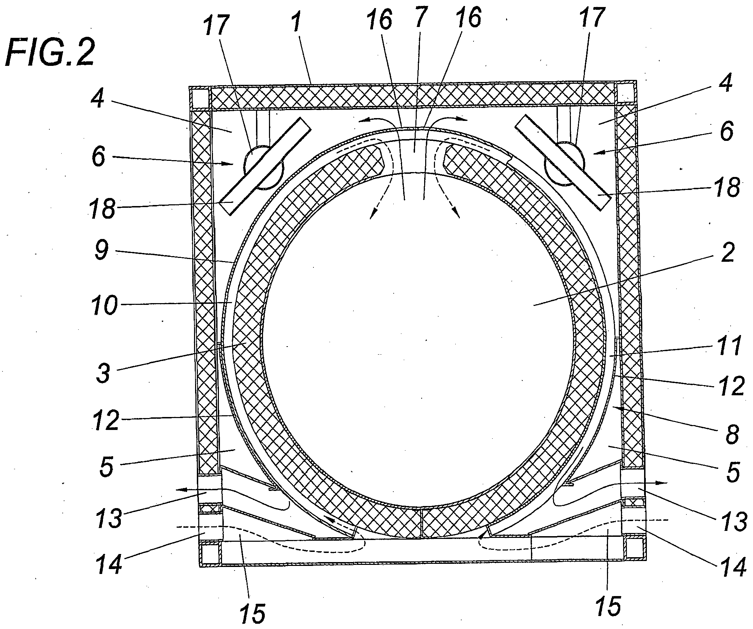

Die heißen Abgase treten durch einen im Scheitelbereich der Brennkammer 2 vorgesehenen, sich im wesentlichen über die axiale Länge der Brennkammer 2 erstreckenden Abgasaustritt 7 aus der Brennkammer 2 aus und strömen nach beiden Seiten in die Zwickelräume 4, wie dies in der Fig. 2 durch in vollen Linien eingezeichnete Strömungspfeile angedeutet ist. Die aus der Brennkammer 2 austretenden heißen Abgase dienen jedoch nicht nur zum Erwärmen eines Wärmeträgers, sondern auch zum Vorwärmen der für die Müllverbrennung benötigten Verbrennungsluft. Zu diesem Zweck ist ein zusätzlicher Gegenstromwärmetauscher 8 vorgesehen, der die Brennkammer 2 auf der Außenseite der Wärmedämmung 3 umschließt. Der Gegenstromwärmetauscher 8 wird im wesentlichen durch eine zur Wärmedämmung 3 koaxiale Wärmetauscherwand 9 gebildet, die aus einem in Längsrichtung der Brennkammer 2 wellen- oder mäanderförmig profilierten Blech geformt wird, so daß sich durch die Wellenberge und Wellentäler in Umfangsrichtung verlaufende, parallele Strömungswege einerseits für die Verbrennungsluft und anderseits für die Abgase ergeben. Die Anordnung ist dabei so getroffen, daß die Strömungswege auf der der Brennkammer 2 zugekehrten Innenseite der Wärmetauscherwand 9 einen Strömungskanal 10 für die Verbrennungsluft und die Strömungswege auf der Außenseite der Wärmetauscherwand 9 einen Strömungskanal 11 für die Abgase begrenzen. Wie insbesondere der Fig. 1 entnommen werden kann, in der der Schnitt im Bereich der linken Zeichnungshälfte entlang eines Strömungsweges des Strömungskanals 10 für die Verbrennungsluft und im Bereich der rechten Zeichnungshälfte entlang eines Strömungsweges des Strömungskanals 11 für die Abgase geführt ist, werden die Abgase erst im Anschluß an die Zwickelräume 4 durch einen geschlossenen Strömungskanal 11 gefördert, der durch eine die Wärmetauscherwand 9 abdeckende Leitwand 12 begrenzt wird. Dies bedeutet, daß in den unteren Zwickelräumen 5 auch für die Abgase eine Zwangsführung gegeben ist, bevor die Abgase über Abgasanschlüsse 13 abgesaugt werden.

Die Zufuhr der Verbrennungsluft erfolgt ebenfalls durch die unteren Zwickelräume 5, und zwar durch Luftanschlüsse 14, die unterhalb der Abgasanschlüsse 13 verlaufen und in einer gegenüber den Abgasen abgedichteten Verteilerkammer 15 münden. Wie den mit strichlierten Linien in der Fig. 2 eingezeichneten Strömungspfeilen für die Verbrennungsluft entnommen werden kann, münden die Strömungswege des Strömungskanals 10 für die Verbrennungsluft im Bereich des Abgasaustrittes 7 der Brennkammer 2, weil die Wärmetauscherwand 9 diesen Abgasaustritt 7 abdeckt und lediglich Durchtrittsöffnungen 16 für die Abgase aus der Brennkammer 2 aufweist. Durch diese Maßnahme wird erreicht, daß ein Teil der Verbrennungsluft mit den heißen Abgasen in die Zwickelräume 4 mitgerissen wird und dort als Sekundärluft für eine vorteilhafte Nachverbrennung wirksam werden kann.

Die in die Zwickelräume 4 ausströmenden heißen Abgase sorgen für eine Wärmebeaufschlagung der Wärmetauscher 6 zur Erwärmung eines Wärmeträgers, vorzugsweise Wasser. Um gute Wärmeübergänge zu ermöglichen, werden die Wärmetauscher 6 durch Strömungsrohre 17 gebildet, die an einen Vorund einen Rücklauf eines Wärmeträgerkreises angeschlossen sind, was jedoch aus Übersichtlichkeitsgründen nicht dargestellt ist. Diese parallel zu Brennkammer 2 verlaufenden Strömungsrohre 17 werden in radialer Richtung von Rohrstutzen 18 durchsetzt, die in Richtung der Hauptströmung der Abgase im Bereich der Wärmetauscher 6 geneigt sind, so daß diese Rohrstutzen 18 von einem Teilstrom der heißen Abgase durchströmt werden.

Die Beschickung der Brennkammer 2 mit dem zu verbrennenden Müll erfolgt von einer Stirnseite her, und zwar vorteilhaft über einen Beschickungsstempel, der das in einen der Brennkammer 2 vorgelagerten, koaxialen Zylinder eingebrachte Brenngut aus dem Zylinder in die Brennkammer 2 verlagert und zugleich einen stirnseitigen Verschluß für die Brennkammer 2 bilden kann. Die Entleerung der anfallenden Asche kann von der anderen Stirnseite der Brennkammer 2 her erfolgen, wobei verschieden konstruktive Möglichkeiten bestehen. Eine davon ergibt sich mit Hilfe einer Entnahmeschnecke, die von der Stirnseite in die Brennkammer eingefahren wird und die Asche bzw. die Verbrennungsreste aus der Brennkammer fördert. Selbstverständlich kann die Brennkammer 2 auch mit einem von der Brennkammer durch einen Rost abgetrennten Ascheaufnahmeraum unterhalb der Brennkammer 2 versehen werden, um die Verbrennungsrückstände aus diesem Ascheaufnahmeraum zu fördern.

Während der Müllverbrennung wird die Verbrennungsluft mit Hilfe wenigstens eines Gebläses in die Brennkammer 2 gefördert, wobei die anfallenden Abgase in der beschriebenen Weise unter vorteilhafter Ausnützung ihrer fühlbaren Abwärme abgezogen werden. Die Zuströmbedingungen der Verbrennungsluft zur Brennkammer 2 und die Ausströmverhältnisse für die Abgase können im Bereich des Abgasaustrittes 7 durch Leiteinrichtungen den jeweiligen Verhältnissen angepaßt werden. Die aus dem Gehäuse 1 über die Abgasanschlüsse 13 abgezogenen Abgase können zur Optimierung der schadstoffarmen Müllverbrennung gegebenenfalls über einen Abgaswäscher und einen Kondensatabscheider in einem Kreislauf teilweise der Verbrennungsluft zugemischt werden, und zwar in besonders günstiger Weise zusammen mit Wasserdampf, um entsprechende Reaktionen zwischen dem bei der Verbrennung anfallenden Kohlenstoff, dem Kohlenmonoxid, dem Kohlendioxid, dem Luftsauerstoff und dem Wasserdampf bei vergleichsweise niedrigen, die Ausbildung von Dioxinen und anderen Schadstoffen unterdrückenden Verbrennungstemperaturen zu gewährleisten.

## Patentansprüche

1. Vorrichtung zum Verbrennen organischer Stoffe mit einer in einem Gehäuse (1) vorgesehenen, gegenüber dem Gehäusen (9) wärmegedämmten, liegenden Brennkammer (2) und mit einem die Verbrennungsluft mit Hilfe der heißen Abgase aus der Brennkammer (2) vorwärmenden Gegenstromwärmetauscher (8), der einen zwischen der Brennkammer (2) und einer die Brennkammer (2) umschließenden Wärmetauscherwand (9) gebildeten Strömungskanal (10) für die Verbrennungsluft sowie einen Strömungskanal (11) für die heißen Abgase auf der der Brennkammer (2) abgewandten Seite der Wärmetauscherwand (9) bildet, **dadurch gekennzeichnet, daß** die Wärmetauscherwand (9) des Gegenstromwärmetauschers (8) auf der Außenseite der Wärmedämmung (3) der Brennkammer (2) vorgesehen ist, die einen oberen in das Gehäuse (1) mündenden Abgasaustritt (7) aufweist, daß in den oberen sich beidseits der Brennkammer (2) zwischen der Brennkammer (2) und dem im wesentlichen prismatischen Gehäuse (1) ergebenden Zwickelräumen (4) parallel zur Brennkammer (2) verlaufende Wärmetauscher (6) für die Erwärmung eines Wärmeträgers mit der fühlbaren Abwärme der heißen Abgase vorgesehen sind und daß der die Abgase aufnehmende Strömungskanal (11) des Gegenstromwärmetauschers (8) für die Verbrennungsluft von den beiden Zwickelräumen (4) ausgeht, während sich die Wärmetauscherwand (9) mit dem Strömungskanal (10) für die Verbrennungsluft in die Zwickelräume (4) erstreckt.

2. Vorrichtung nach Anspruch 1, **dadurch gekennzeichnet, daß** der die Verbrennungsluft aufnehmende Strömungskanal (10) des Gegenstromwärmetauschers (8) zwischen der Brennkammer (2) und der Wärmetauscherwand (9) im Bereich des Abgasaustrittes (7) in die Brennkammer (2) mündet.

3. Vorrichtung nach Anspruch 1 oder 2, **dadurch gekennzeichnet, daß** die Wärmetauscherwand (9) des Gegenstromwärmetauschers (8) den Abgasaustritt (7) der Brennkammer (2) überdeckt und im Bereich des Abgasaustrittes (7) Durchtrittsöffnungen (16) aufweist.

4. Vorrichtung nach einem der Ansprüche 1 bis 3, **dadurch gekennzeichnet, daß** die Wärmetauscher (6) für einen Wärmeträger in den Zwickelräumen (4) des Gehäuses (1) ein zur Achse der Brennkammer (2) paralleles Strömungsrohr (17) für den Wärmeträger aufweisen, das mit Rohrstutzen (18) für die Abgasführung radial durchsetzt ist.

## Claims

1. Apparatus for burning organic substances, comprising a horizontal combustion chamber (2) provided in a housing (1) and heat-insulated with respect to the housing (9), and a counter-flow heat exchanger (8) which preheats the combustion air with the aid of the hot exhaust gases from the combustion chamber (2) and which forms a flow duct (10) for the combustion air, which flow duct is formed between the combustion chamber (2) and a heat-exchanger wall (9) enclosing the combustion chamber (2), as well as a flow duct (11) for the hot exhaust gases on the side of the heat-exchanger wall (9) facing away from the combustion chamber (2), **characterised in that** the heat-exchanger wall (9) of the counter-flow heat exchanger (8) is provided on the outer side of the heat insulation (3) of the combustion chamber (2) which has an upper exhaust gas outlet (7) opening into the housing (1), **in that**, in the upper interstices (4) created on both sides of the combustion chamber (2) between the combustion chamber (2) and the substantially prismatic housing (1), heat exchangers (6) which extend in parallel with the combustion chamber (2) are provided for heating a heat-transfer medium with the sensible waste heat of the hot exhaust gases, and **in that** the exhaust gas-receiving flow duct (11) of the counter-flow heat exchanger (8) for the combustion air originates from the two interstices (4), while the heat-exchanger wall (9) extends with the flow duct (10) for the combustion air into the interstices (4).

2. Apparatus as claimed in claim 1, **characterised in that** the combustion air-receiving flow duct (10) of the counter-flow heat exchanger (8) between the combustion chamber (2) and the heat-exchanger wall (9) opens into the combustion chamber (2) in the region of the exhaust gas outlet (7).

3. Apparatus as claimed in claim 1 or 2, **characterised in that** the heat exchanger wall (9) of the counter-flow heat exchanger (8) covers the exhaust gas outlet (7) of the combustion chamber (2) and has pass-through openings (16) in the region of the exhaust gas outlet (7).

4. Apparatus as claimed in any one of claims 1 to 3, **characterised in that** the heat exchangers (6) have for a heat-transfer medium in the interstices (4) of the housing (1) a flow pipe (17) for the heat-transfer medium, said flow pipe being in parallel with the axis of the combustion chamber (2) and having pipe connections (18) passing radially therethrough for guidance of exhaust gas.

## Revendications

1. Dispositif servant à brûler des matières organiques avec une chambre de combustion (2) prévue dans une enveloppe (1), placée thermiquement isolée par rapport à l'enveloppe (1) et avec un échangeur thermique à contre-courant (8) préchauffant l'air de combustion à l'aide des gaz brûlés chauds provenant de la chambre de combustion (2) qui forme un conduit d'écoulement (10), formé entre la chambre de combustion (2) et une paroi de l'échangeur thermique (9) entourant la chambre de combustion (2) pour l'air de combustion, ainsi qu'un conduit d'écoulement (11) pour les gaz brûlés chauds sur la face, opposée à la chambre de combustion (2), de la paroi de l'échangeur thermique (9), **caractérisé en ce que** la paroi de l'échangeur thermique (9) de l'échangeur thermique à contre-courant (8) est prévue sur la face extérieure de l'isolation thermique (3) de la chambre de combustion (2) qui présente une sortie de gaz brûlés (7) supérieure, débouchant dans l'enveloppe (1), **en ce que** des échangeurs thermiques (6) s'étendant parallèlement à la chambre de combustion (2), pour chauffer un fluide caloporteur avec la chaleur sensible dissipée par les gaz brûlés chauds sont prévus dans les espaces en forme de coin (4) supérieurs situés de part et d'autre de la chambre de combustion (2) entre la chambre de combustion (2) et l'enveloppe (1) essentiellement prismatique et **en ce que** le conduit d'écoulement (11), recevant les gaz brûlés, de l'échangeur thermique à contre-courant (8) pour l'air de combustion part des deux espaces en forme de coin (4) alors que la paroi de l'échangeur thermique (9) s'avance avec le conduit d'écoulement (10) pour l'air de combustion dans les espaces en forme de coin (4).

2. Dispositif selon la revendication 1, **caractérisé en ce que** le conduit d'écoulement (10), recevant l'air de combustion, de l'échangeur thermique à contre-courant (8) débouche entre la chambre de combustion (2) et la paroi de l'échangeur thermique (9) dans la zone de la sortie des gaz brûlés (7) dans la chambre de combustion (2).

3. Dispositif selon la revendication 1 ou 2, **caractérisé en ce que** la paroi de l'échangeur thermique (9) de l'échangeur thermique à contre-courant (8) recouvre la sortie des gaz brûlés (7) de la chambre de combustion (2) et présente, dans la zone de la sortie des gaz brûlés (7), des ouvertures de passage (16).

4. Dispositif selon l'une des revendications 1 à 3, **caractérisé en ce que** les échangeurs thermiques (6) présentent pour un fluide caloporteur dans les espaces en forme de coin (4) de l'enveloppe (1) un tuyau d'écoulement (17) parallèle à l'axe de la chambre de combustion (2), pour le fluide caloporteur, qui est traversé radialement avec des tubulures (18) pour l'évacuation des gaz brûlés.
